# EUROPEAN PATENT APPLICATION

(11) **EP 4 775 513 A1**
(43) Date of publication of application: **15.07.2026**
(21) Application number: 25151870.0
(22) Date of filing: 14.01.2025
(51) Int. Cl.: B65G 1/04

(54) **SERVICE VEHICLE FOR AN AUTOMATED STORAGE AND RETRIEVAL SYSTEM**

(71) Applicant: AutoStore Technology AS, 5578 Nedre Vats (NO)
(72) Inventor: AUSTRHEIM, Trond, 5578 Nedre Vats (NO); FITJE, Martin, 5578 Nedre Vats (NO); MYRBAKKEN, Joakim Aleksander, 5578 Nedre Vats (NO); GJERDEVIK, Øystein, 5578 Nedre Vats (NO)
(74) Representative: Kilburn & Strode LLP

(57) **Abstract**

The disclosure relates to a service vehicle (500) for operation in an automated storage and retrieval system comprising a storage grid having a rail system formed thereon, the rail system comprising pairs of rails extending in a first grid direction and a second grid direction different from the first grid direction. The service vehicle comprises: a chassis (510) having a powered drive system for moving the service vehicle over the rail system of the grid in the first grid direction and the second grid direction; and an operator area (520) atop the chassis for accommodating an operator, wherein at least a portion of the powered drive system is also manually operable, such that the service vehicle is also manually moveable over the rail system in the first grid direction and the second grid direction

## Description

### TECHNICAL FIELD

The disclosure relates to a service vehicle for an automated storage and retrieval system. More particularly, it relates to a service vehicle having a powered drive system for moving the service vehicle over a rail system in a first direction and a second direction, wherein at least a portion of the powered drive system is also manually operable.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

With existing automated storage and retrieval systems, container-handling vehicles may malfunction such that they become stranded on the grid. In such situations, an operator may need to intervene by performing a maintenance operation on the malfunctioning container-handling vehicle. This may require an operator to attend to the container-handling vehicle, for example by going to the container-handling vehicle, picking up the container-handling vehicle, or dragging the container-handling vehicle off the grid to a maintenance area for repair. For such maintenance operations, sending an operator unaided out onto the grid can be highly dangerous, and can require a shutdown of the other container-handling vehicles to allow access by the operator, and a so a service vehicle is provided in which an operator can be protected as they access the grid using the service vehicle and as they perform the maintenance operation.

The present disclosure provides an improved service vehicle that addresses deficiencies with existing service vehicles.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 is a perspective view of a service vehicle suitable for use in the system of Fig. 1;
Fig. 6 is a top view a chassis of a service vehicle showing components of a drive system;
Fig. 7 is a schematic drawing of the drive system shown in Fig. 6;
Fig. 8 is schematic diagram of a linkage mechanism; and
Fig. 9 is a schematic cross-section of an electromagnetic brake.

### DETAILED DESCRIPTION

### Summary

At its most general, the present invention provides a service vehicle which, in addition to being moveable in an automated storage and retrieval system by a powered drive system, can also be moved manually if required.

In overview, the disclosure relates to a service vehicle for operation in an automated storage and retrieval system comprising a storage grid having a rail system formed thereon, the rail system comprising pairs of rails extending in a first grid direction and a second grid direction different from the first grid direction, wherein the service vehicle comprises: a chassis having a powered drive system (e.g., an electrically powered drive system) for moving the service vehicle over the rail system of the grid in the first grid direction and the second grid direction; and an operator area atop the chassis for accommodating an operator. At least a portion of the powered drive system is also manually operable, such that the service vehicle is also manually moveable over the rail system in the first grid direction and the second grid direction. That is, in addition to being moveable over the rail system by the powered drive system, the service vehicle is also configured to allow movement of the service vehicle over the entire rail system without power (that is, manually or physically, such as by pushing or pulling the service vehicle across the rail system). For example, in addition to powered components, the drive system may comprise one or more manually operable components (e.g., additional manually operable components, and/or wherein one or more powered components are also manually operable in some manner). The configuration of the manually operable components may depend on the design of the powered drive system, for example. This allows the service vehicle to be moved over the rail system, for example by the operator, in the event that the powered drive system stops working for any reason or if there is a malfunctioning of the service vehicle (e.g., in the event of a power outage, if a battery which powers the drive system is depleted, and/or in the event that a powered component malfunctions).

Optionally, the powered drive system may comprise a first set of wheels for engaging a first pair of rails for movement in the first grid direction and a second set of wheels for engaging a second pair of rails for movement in the second grid direction, and a powered track shift mechanism for selectively raising or lowering one of the first set of wheels or the second set of wheels (e.g., relative to the chassis), wherein the track shift mechanism is also manually operable. For example, one or more components of the track shift mechanism may be manually operable. Providing a track shift mechanism in this way is an example of a means by which the service vehicle is able to be manually moved across the entire extent of the grid, and is not limited to one grid direction based on when the powered drive system stops working. This also allows the track shift mechanism to be manually operated in case of a fault or malfunction affecting only the track shift mechanism.

Optionally, the powered track shift mechanism may comprise a rotatable shaft; a track shift motor operatively connected to the rotatable shaft; a beam supporting a pair of wheels belonging to the one of the first set of wheels or the second set of wheels, the beam being linearly moveable to selectively raise or lower the pair of wheels; and a mechanical linkage connected between the rotatable shaft and the longitudinal beam, the mechanical linkage configured to covert rotational motion of the rotatable shaft into linear motion of the beam, wherein the rotatable shaft is configured to be manually rotatable. It will be appreciated that the term 'configured' in this respect means that the rotatable shaft is adapted in some way to allow an operator to easily rotate the shaft manually. In one example, this is by having a keyed portion which is shaped to confirm with a wrench or other tool which can be used for rotating the shaft, but it will be appreciated that other arrangements could be considered (e.g., an inbuilt manual crank).

Optionally, the powered drive system may comprise an electromagnetic brake, wherein the electromagnetic brake is configured to apply a braking force when no power is supplied thereto, and wherein the electromagnetic brake comprises a manually operable brake release mechanism. An electromagnetic brake provides a 'fail safe' system in that the brake is configured to be applied in the event of power loss or other malfunction. By providing a manually operable brake release mechanism, the electromagnetic brake can be disengaged or released by an operator when it is safe to do so, allowing the service vehicle to be manually moved across the rail system. In an example, the electromagnetic brake comprises an armature biased into engagement with a rotor, and the manually operable brake release mechanism comprises a lever or screw operable to manually disengage the armature from the rotor. Of course, any suitable manual mechanism for disengaging or disapplying the brake may be considered in other examples.

Optionally, the chassis comprises an inspection door which is openable to allow an operator located in the operator area to access at least a portion of the powered drive system that is manually operable. In examples, the powered drive system may be configured such that the portion of the powered drive system which is manually operable (e.g., the manually operable components of the drive system) may be located as to be easily accessible through the inspection door.

Optionally, the service vehicle may further comprise a holder for receiving a wrench for manually rotating a shaft of the powered drive system. For example, the holder may be provided in or as part of the operator area, or the holder may be provided as part of the chassis. In one example, the holder may be accessible via the inspection door, optimising room available in the operator area for other uses.

Also described herein is a service system comprising the service vehicle, and a wrench for manually rotating a shaft of the powered drive system of the service vehicle (e.g., a shaft of a track shift mechanism). The service system may also further comprise a manoeuvring pole for moving the service vehicle in the first grid direction or the second grid direction. For example, the manoeuvring pole may be used by an operator to push or pull against parts of the rail system so as to manually move the service vehicle.

### Automated storage and retrieval system overview

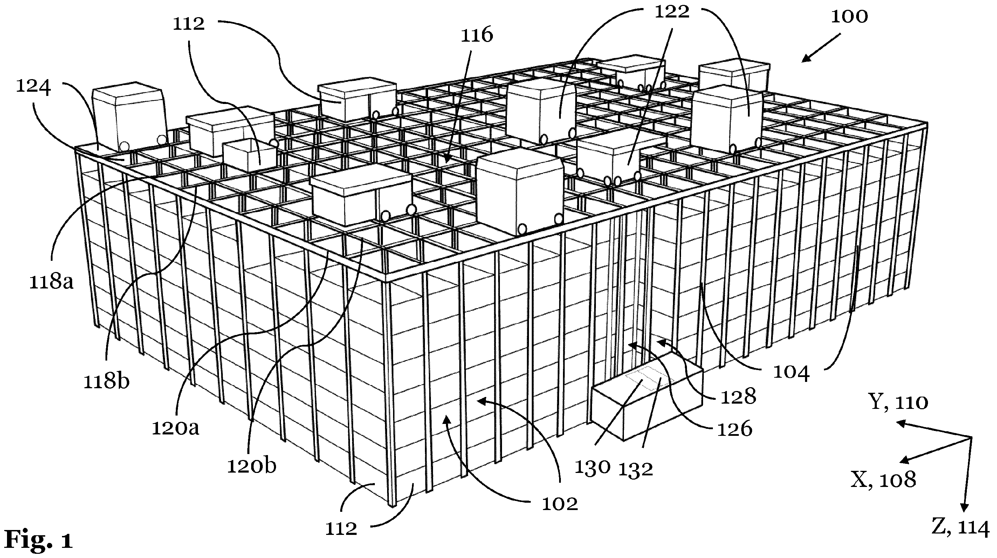

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

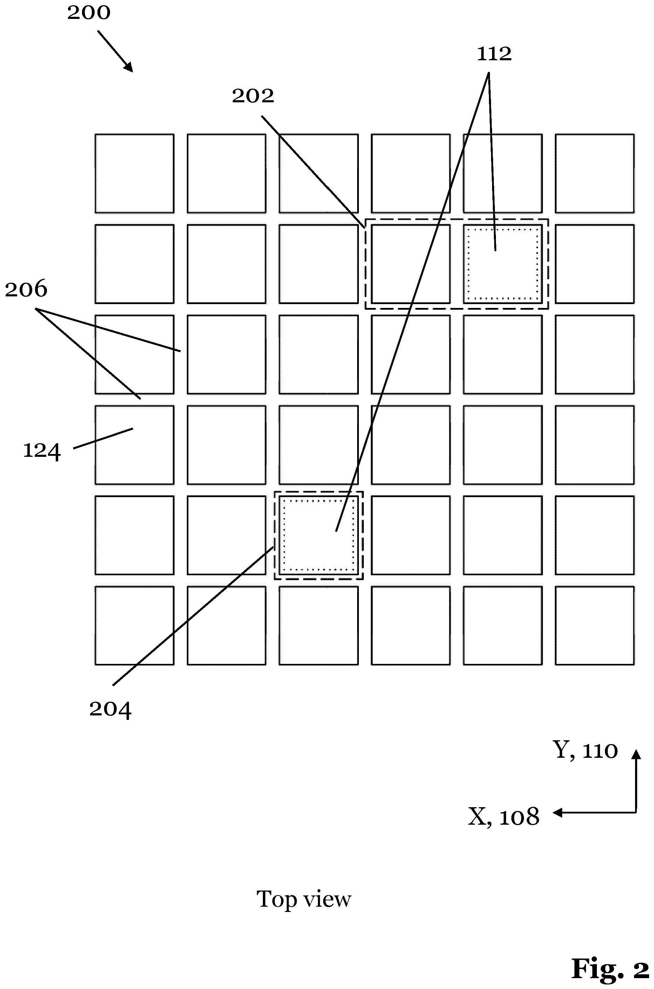

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

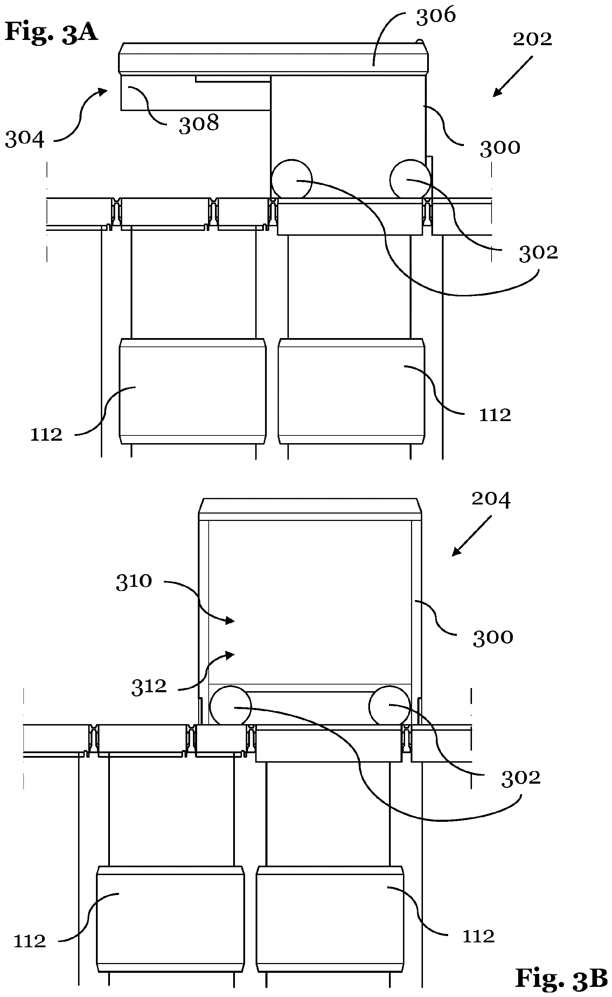

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

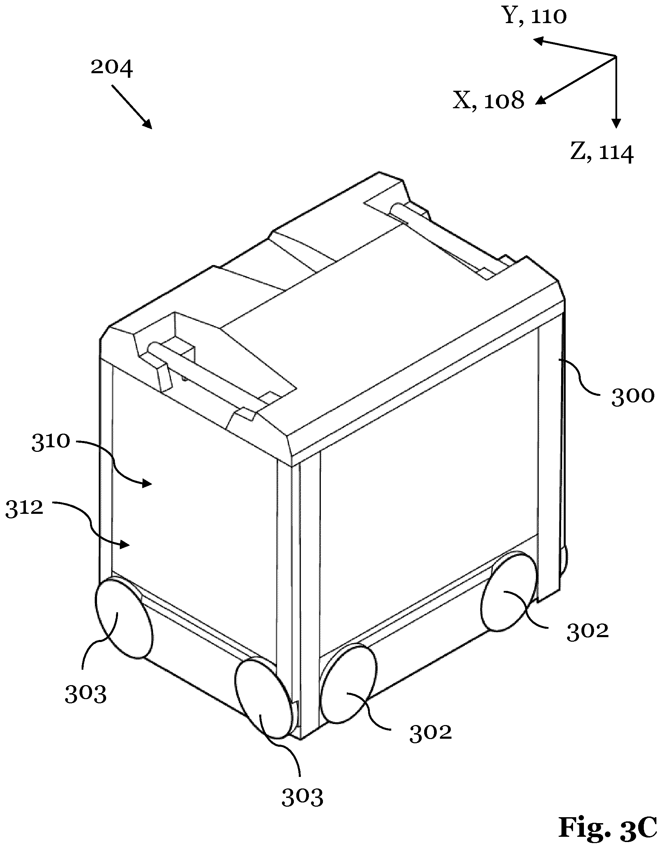

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

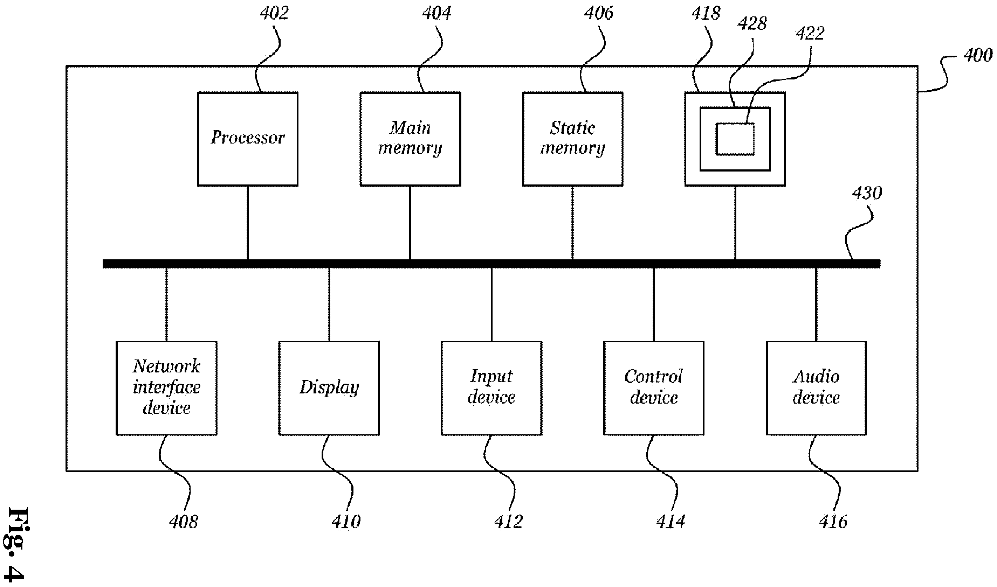

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Service Vehicle and Service System

In the following description examples of the present disclosure will be discussed with reference to the drawings. It will be appreciated that the described examples are not intended to limit the scope of protection, the scope of protection being defined by the appended claims. It will also be appreciated that features of the examples can be combined with those of other examples in any suitable manner wherever indications to the contrary are absent.

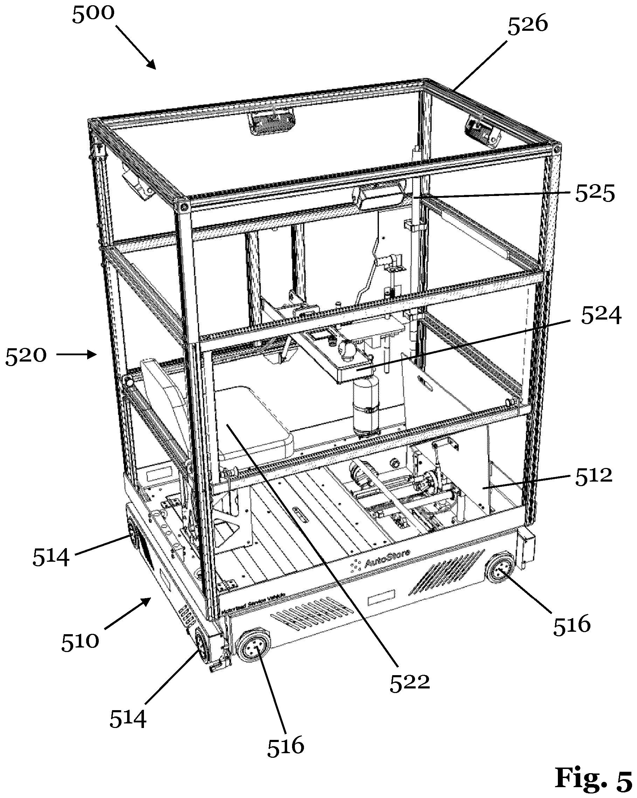

Fig. 5 shows a perspective drawing of a service vehicle 500 for operation in an automated storage and retrieval system comprising a storage grid having a rail system formed thereon, such as the automated storage and retrieval system 100 described above which comprises a rail system 116.

The service vehicle 500 comprises a chassis 510, the chassis 510 having a powered drive system (which may be referred to as "a drive system") for moving the service vehicle 500 over the rail system of the grid in the first grid direction (e.g., the X direction 108) and the second grid direction (e.g., the Y direction 110).

Atop the chassis 510, the service vehicle 500 comprises an operator area 520 which is provided to accommodate an operator of the service vehicle 500. In this example, the operator area 520 comprises a seat 522 for supporting the operator, and an operator control panel 524 for providing the operator with the ability to control the powered drive system to move the service vehicle 500 across the rail system. The operator area 520 further comprises an enclosure 526 for the operator's safety. Other components may also be present in the operator area 520 depending on the operator's requirements which are not shown here. For example, the operator area 520 may additionally comprise tools for fixing or otherwise interacting with robots which are stuck or broken on the grid; a fire extinguisher; lighting etc. The operator area 520 is also used to store a manoeuvring pole 525 which can be used by an operator to move the service vehicle 500 manually over the rail system, for example by pushing against rails to move the service vehicle 500 manually. The service vehicle 500 and additional tools (e.g., manoeuvring pole 525, and a wrench as described below) thereby provide a service system.

The chassis 510 comprises an inspection door 512 which is openable to allow an operator located in the operator area 520 to access at least a portion of the powered drive system that is manually operable (that is, to enable easy access to manually operable components of the powered drive system as described herein).

The chassis 510 also comprises a first set of wheels 514 to permit movement of the service vehicle in one of the X and Y directions, and a second set of wheels 516 permitting movement in the other of the X and Y directions. The first set of wheels 514 can be selectively raised or lowered to permit selective engagement of the rails for movement in the X or Y direction. It will be appreciated that, in other examples, the second set of wheels 516 may be selectively raised or lowered, or both sets of wheels 514, 516 may be selectively raised or lowered. Raising and lowering of a set of wheels, and driving each set of wheels, is controlled by the drive system within the chassis 510 for moving the service vehicle 500 over the rail system in the first grid direction and second grid direction. For example, the drive system can be controlled by an operator using the control panel 524. If there is a malfunction and/or the service vehicle 500 loses power for any reason, the service vehicle 500 is manually moveable over the rail system in the first grid direction and the second grid direction as at least a portion of the drive system is also manually operable, as described below.

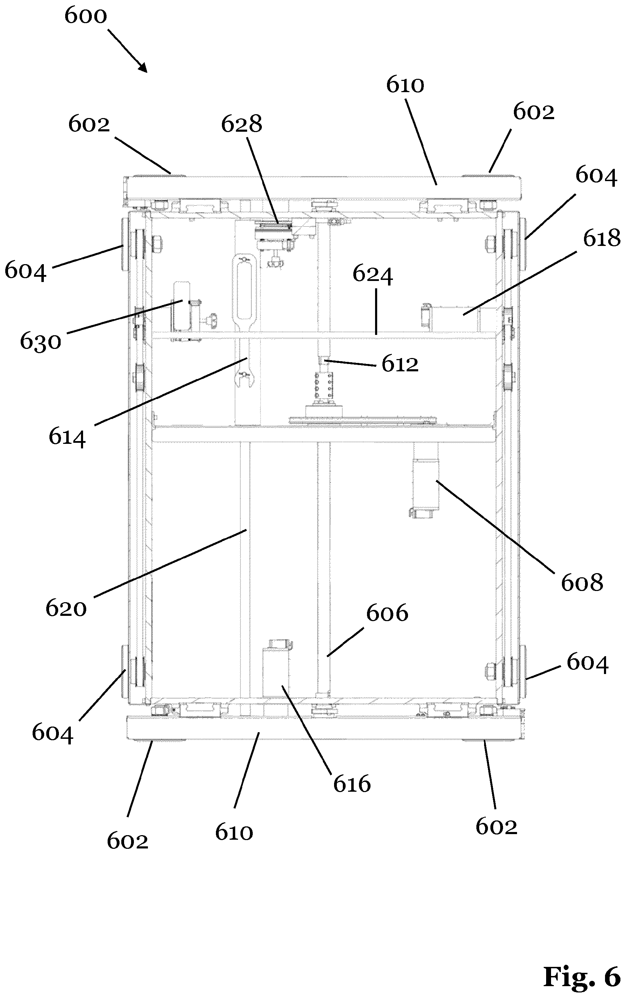

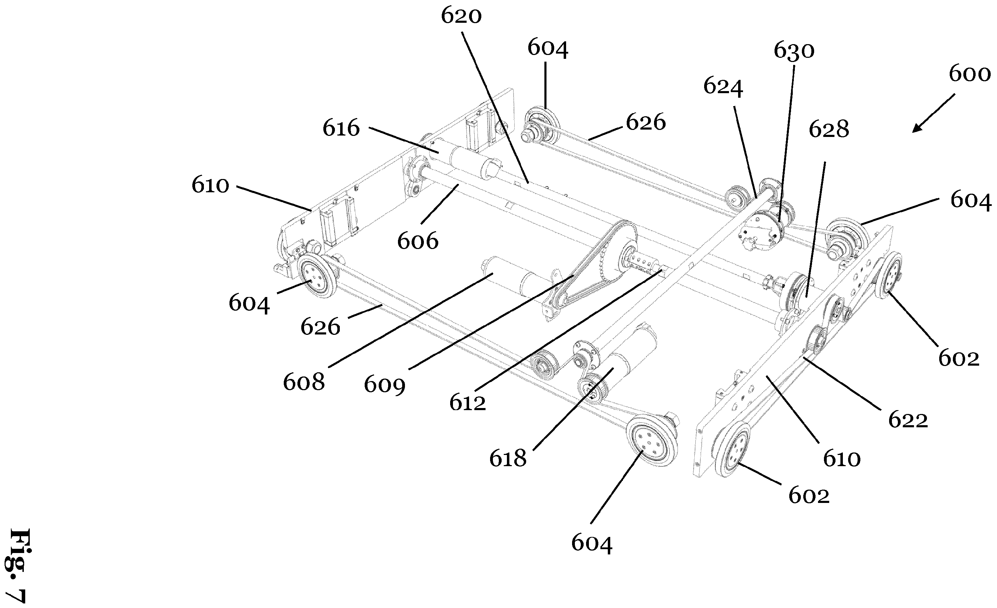

An example of a powered drive system 600 that may be used in a service vehicle will now be described with reference to Figs. 6 and 7, wherein Fig. 6 shows a top view of a chassis (wherein an upper covering of the chassis is removed to show the components of the drive system) and Fig. 7 shows a schematic diagram of the drive system 600. The drive system 600 may be a drive system of the service vehicle 500 described with respect to Fig. 5, for example.

The powered drive system 600 comprises a first set of wheels 602 for engaging a first pair of rails for movement in the first grid direction (e.g., either of the X direction 108 or the Y direction 110) and a second set of wheels 604 for engaging a second pair of rails for movement in the second grid direction (e.g., the other of the X direction 108 or Y direction 110).

The first set of wheels 602 are selectively raisable or lowerable by a powered track shift mechanism. The powered track shift mechanism comprises a rotatable shaft 606 and a track shift motor 608 which is operatively connected to the rotatable shaft 606 (e.g., by a belt or chain drive mechanism 609, or any other suitable drivetrain). Each end of the rotatable shaft 606 is connected, via a mechanical linkage, to a beam 610 which supports one pair of the first set of wheels 602. The mechanical linkage is configured to convert rotational motion of the rotatable shaft 606 into linear motion of the beam 610 to which it is connected. In this way, as the shaft 606 rotates, each beam 610 is moved linearly to raise or lower the first set of wheels 602 relative to the chassis. To guide and constrain the raising and lowering of the first set of wheels 602, each beam 610 is slidably mounted to the chassis (e.g., using a rail and slider mechanism).

In the event that the track shift motor 608 stops working (for example due to power loss) or malfunctions, or there is some other problem, the track shift mechanism is configured to be manually operable. In particular, the rotatable shaft 606 can be manually rotated by an operator, allowing the track shift mechanism to be manually operated such that the first set of wheels 602 can be raised or lowered by the operator without power. This allows the service vehicle to be moveable across the rail system in both the first grid direction and the second grid direction, and is not constrained to be moveable in only one of the first grid direction or second grid direction based on which set of wheels is in engagement with rails at that time. Manual operation of the track shift mechanism may also be useful if there is a malfunction or power loss which occurs when both the first set of wheels 602 and the second set of wheels 604 are in contact with respective rails, as the service vehicle would otherwise be stuck in place on the rail system. In this way, the track shift mechanism is manually operable in addition to being powered.

To aid an operator in manually turning the rotatable shaft 606, the rotatable shaft 606 comprises a keyed portion 612 which is shaped to conform with a wrench 614 for rotating the shaft 606. The wrench 614 can thereby be used by an operator to rotate the shaft 606, gaining mechanical advantage to more easily raise or lowering the first set of wheels 602. When not in use, the wrench 614 is received by a holder within the chassis (as shown in Fig. 6).

The holder for receiving the wrench 614 and the keyed portion 612 of the shaft 606 are located as to be easily accessible to the operator through an inspection door in the chassis (e.g., the inspection door 512 described above).

To move the service vehicle over the rail system, the powered drive system 600 also comprises a first drive motor 616 associated with the first set of wheels 602, and a second drive motor 618 associated with the second set of wheels 604. To deliver power from the first drive motor 616 to each of the first set of wheels 602, the drive system 600 comprises a first drive shaft 620 and first belt drives 622. The first belt drives 622 are mounted to the beams 610 such that they are moveable with the raising and lowering of the first set of wheels 602. Similarly, to deliver power from the second drive motor 618 to each of the second set of wheels 604, the drive system 600 comprises a second drive shaft 624 and second belt drives 626.

The powered drive system 600 further comprises a first electromagnetic brake 628 associated with the first set of wheels 602 via the first belt drives 622 and first drive shaft 622, and a second electromagnetic brake 630 associated with the second set of wheels 604 via the second belt drives 626 and second drive shaft 624. Each electromagnetic brake 628, 630 is configured to apply a braking force when no power is supplied thereto, and thereby acts as a fail-safe brake. When power is applied to a brake, an electromagnetic coil disengages the brake to allow the associated set of wheels to move under control by a motor. To ensure that the service vehicle can still be moved by an operator in the event of power failure or the like, each brake 628, 630 comprises a manually operable brake release mechanism. An operator is thereby able to manually disengage the brakes 628, 630, removing the braking force from the first set of wheels 602 and second set of wheels 604 in order to move the service vehicle across the rail system. The brakes 628, 630 are also positioned so as to be easily accessible to an operator through an inspection door in the chassis (e.g., the inspection door 512 described above).

A portion of the powered drive system 600 is thereby also manually operable, allowing the service vehicle in which the drive system 600 is applied to be manually moveable over a rail system of an automated storage and retrieval system in a first grid direction and a second grid direction. In particular, the powered drive system 600 comprises manually operable components in the form of the rotatable shaft 606 of the track shift mechanism, and the electromagnetic brakes 628, 630. Each of these components is located so as to be accessible to an operator through an inspection door in the chassis of the service vehicle to improve ease of use.

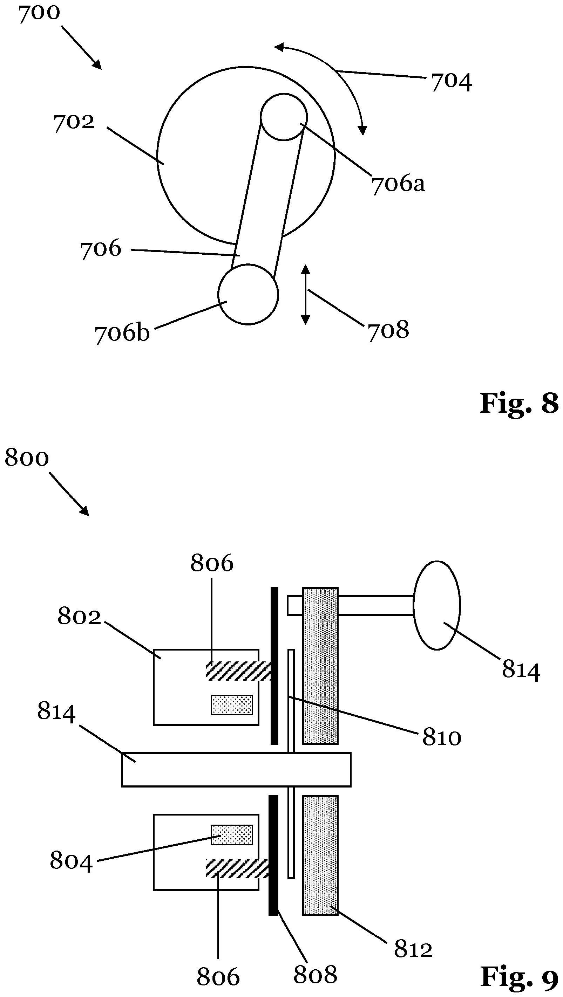

Fig. 8 is a schematic drawing of the mechanical linkage 700 that may be connected between a rotatable shaft of a track shift mechanism and a beam which supports a pair of wheels, the mechanical linkage being configured to convert rotational motion of the rotatable shaft into linear motion of the beam for selectively raising and lowering the pair of wheels. For example, the mechanical linkage may be used in the powered drive system described above with respect to Figs. 6 and 7.

The linkage 700 comprises a disc 702 which is connected to an end of the rotatable shaft, such that as the shaft rotates the disc 702 also rotates (as indicated by arrow 704). A connecting rod 706 is pivotably connected to the disc 706 at a first end thereof 706a, and is pivotably connected to the beam at a second end thereof 706b. The second end 706b of the connecting rod 706 is fixed to the beam such that as the disc 702 rotates, the beam moves linearly to raise or lower the pair of wheels (as indicated by arrow 708). The beam is slidably mounted to the chassis such that the wheels move relative to the chassis, as described above.

Fig. 9 is a schematic cross-sectional drawing of an electromagnetic brake 800 that may be used in a service vehicle, for example a service vehicle as described above with respect to Figs. 6 and 7. The electromagnetic brake 800 comprises a manually operable brake release mechanism which is operable to manually disengage the brake as described above.

The electromagnetic brake 800 comprises a stator 802, which houses an electromagnetic coil 804 and a plurality of springs 806. Each of the springs 806 protrudes from the stator 802 and is connected to an armature 808. The springs 806 provide a biasing force which pushes the armature 808 into contact with a rotor 810, thereby applying a braking force. The rotor 810 is squeezed between the armature 808 and a cover plate 812. When a current is applied through the coil 804, a magnetic field is generated which acts to retract the springs 806, disengaging the armature 808 from the rotor 810, and thereby allowing an output shaft 814 (which may be connected to the rotor 810 via a rotor hub) to spin. It will be appreciated that the stator 802, electromagnetic coil 804, armature 808, and rotor 810 are generally annular in shape, such that the output shaft 814 can be received through these components. The cover plate 814 may also be annular, or may have any other suitable shape.

If power to the brake 800 is lost, for example, the armature 808 will become engaged with the rotor 810. To allow manual disengagement of the armature 808 from the rotor 810, the brake 800 comprises a screw 814. The screw 814 is threadedly fitted through the cover plate 812 such that turning the screw 814 (e.g., by an operator of a service vehicle) moves the screw 814 towards and away from the armature 808. If power is lost, then an operator may thereby use the screw 814 to manually disengage the armature 808 from the rotor 810, freeing the output shaft 814 to spin. In other examples, the screw 814 may be replaced with a lever or other arrangement having a similar function. In this way, the brake 800 is manually operable in addition to being powered.

### Penultimate comments

In another example implementation, a service vehicle may be provided for operation in an automated storage and retrieval system comprising a storage grid having a rail system formed thereon, the rail system comprising pairs of rails extending in a first grid direction and a second grid direction different from the first grid, wherein the service vehicle comprises a first set of wheels for engaging a first pair of rails for movement in the first grid direction and a second set of wheels for engaging a second pair of rails for movement in the second grid direction, and a powered track shift mechanism for selectively raising or lowering one of the first set of wheels or the second set of wheels, wherein the track shift mechanism is also manually operable. For example, the service vehicle may comprises a powered drive mechanism comprising the track shift mechanism. The powered track shift mechanism may comprise a rotatable shaft; a track shift motor operatively connected to the rotatable shaft; a beam supporting a pair of wheels belonging to the one of the first set of wheels or the second set of wheels, the beam being linearly moveable to selectively raise or lower the pair of wheels; and a mechanical linkage connected between the rotatable shaft and the beam, the mechanical linkage configured to convert rotational motion of the rotatable shaft into linear motion of the beam, wherein the rotatable shaft is configured to be manually rotatable.

In a further example implementation, a service vehicle may be provided for operation in an automated storage and retrieval system comprising a storage grid having a rail system formed thereon, the rail system comprising pairs of rails extending in a first grid direction and a second grid direction different from the first grid, wherein the service vehicle comprises an electromagnetic brake, the electromagnetic brake configured to apply a braking force when no power is supplied thereto, and wherein the electromagnetic brake comprises a manually operable brake release mechanism. For example, the service vehicle may comprise a powered drive system comprising the electromagnetic brake. For example, the electromagnetic brake may comprise an armature biased into engagement with a rotor, and the manually operable brake release mechanism comprises a lever or screw operable to manually disengage the armature from the rotor.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A service vehicle for operation in an automated storage and retrieval system comprising a storage grid having a rail system formed thereon, the rail system comprising pairs of rails extending in a first grid direction and a second grid direction different from the first grid direction, wherein the service vehicle comprises:
a chassis having a powered drive system for moving the service vehicle over the rail system of the grid in the first grid direction and the second grid direction; and
an operator area atop the chassis for accommodating an operator,
wherein at least a portion of the powered drive system is also manually operable, such that the service vehicle is also manually moveable over the rail system in the first grid direction and the second grid direction.

2. A service vehicle according to claim 1, wherein the powered drive system comprises:
a first set of wheels for engaging a first pair of rails for movement in the first grid direction and a second set of wheels for engaging a second pair of rails for movement in the second grid direction, and
a powered track shift mechanism for selectively raising or lowering one of the first set of wheels or the second set of wheels, wherein
the track shift mechanism is also manually operable.

3. A service vehicle according to claim 2, wherein the powered track shift mechanism comprises:
a rotatable shaft;
a track shift motor operatively connected to the rotatable shaft;
a beam supporting a pair of wheels belonging to the one of the first set of wheels or the second set of wheels, the beam being linearly moveable to selectively raise or lower the pair of wheels; and
a mechanical linkage connected between the rotatable shaft and the beam, the mechanical linkage configured to convert rotational motion of the rotatable shaft into linear motion of the beam, wherein
the rotatable shaft is configured to be manually rotatable.

4. A service vehicle according to claim 3, wherein the rotatable shaft comprises a keyed portion shaped to conform with a wrench for rotating the shaft.

5. A service vehicle according to any preceding claim, wherein the powered drive system comprises an electromagnetic brake, the electromagnetic brake configured to apply a braking force when no power is supplied thereto, and
wherein the electromagnetic brake comprises a manually operable brake release mechanism.

6. A service vehicle according to claim 5, wherein the electromagnetic brake comprises an armature biased into engagement with a rotor, and
the manually operable brake release mechanism comprises a lever or screw operable to manually disengage the armature from the rotor.

7. A service vehicle according to any preceding claim, wherein the chassis comprises an inspection door which is openable to allow an operator located in the operator area to access at least a portion of the powered drive system that is manually operable.

8. A service vehicle according to any preceding claim, wherein the service vehicle further comprises a holder for receiving a wrench for manually rotating a shaft of the powered drive system.

9. A service system comprising a service vehicle according to any one of claims 1 to 8, and a wrench for manually rotating a shaft of the powered drive system of the service vehicle.

10. The service system of claim 9, further comprising a manoeuvring pole for moving the service vehicle over the rail system in the first grid direction or the second grid direction.
